# EUROPÄISCHE PATENTANMELDUNG

(11) **EP 4 056 817 A1**
(43) Veröffentlichungstag der Anmeldung: **14.09.2022**
(21) Anmeldenummer: 22160438.2
(22) Anmeldetag: 07.03.2022
(51) Int. Cl.: F01N 3/021, F01N 3/035, F01N 3/10, F01N 3/20, F01N 13/00

(54) **ABGASNACHBEHANDLUNGSSYSTEM UND VERFAHREN ZUR ABGASNACHBEHANDLUNG EINES VERBRENNUNGSMOTORS**

(30) Priorität: 12.03.2021 DE 102021106096
(71) Anmelder: Volkswagen AG, 38436 Wolfsburg (DE)
(72) Erfinder: Paukner, Stefan, 38442 Wolfsburg (DE); Baron von Ceumern-Lindenstjerna, Falk-Christian, 38124 Braunschweig (DE); Kaack, Michael, 38531 Rötgesbüttel (DE); Car, Onur Ulas, 10115 Berlin (DE); Schlüter, Lars, 38458 Velpke (DE); Paulovsky, Markus, 38448 Wolfsburg (DE)
(74) Vertreter: Gulde & Partner

(57) **Zusammenfassung**

Die Erfindung betrifft ein Abgasnachbehandlungssystem für einen Verbrennungsmotor (10) mit einer Abgasanlage (20), in welcher in Strömungsrichtung eines Abgasstroms des Verbrennungsmotors (10) ein motornaher erster Drei-Wege-Katalysator (34) und stromabwärts des motornahen ersten Drei-Wege-Katalysators (34) ein zweiter motornaher Drei-Wege-Katalysator (40) und ein Partikelfilter (42) angeordnet sind. Der motornahe erste Drei-Wege-Katalysator (34) ist mittels eines elektrischen Heizelements (30) unabhängig vom Abgasstrom des Verbrennungsmotors beheizbar.

Es ist vorgesehen, dass der motornahe erste Drei-Wege-Katalysator (34) in einem ersten Gehäuse (28) und der motornahe zweite Drei-Wege-Katalysator (40) in einem zweiten Gehäuse (38) angeordnet sind, wobei die Mittelachse (M1) des ersten Gehäuses (28) und die Mittelachse (M2) des zweiten Gehäuses in einem Winkel von -10° bis 70° zueinander angeordnet sind. Dabei wird ein Abgasstrom des Verbrennungsmotors (10) durch ein Umlenkelement (36) zwischen dem ersten Gehäuse (28) und dem zweiten Gehäuse (38) um mindestens 100° umgelenkt.

## Beschreibung

Die Erfindung betrifft ein Abgasnachbehandlungssystem und ein Verfahren zur Abgasnachbehandlung eines fremdgezündeten Verbrennungsmotors gemäß dem Oberbegriff der unabhängigen Patentansprüche.

Die kontinuierliche Verschärfung der Abgasgesetzgebung stellt hohe Anforderungen an die Fahrzeughersteller, welche durch entsprechende Maßnahmen zur Verringerung der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem unterstöchiometrischen Verbrennungsluftverhältnis nach dem Kaltstart, kalter Zylinderwände sowie der heterogenen Gemischverteilung in den Brennräumen des Verbrennungsmotors. Im Gegensatz zur Beladung eines Dieselpartikelfilters erfolgt die Rußbeladung eines Ottopartikelfilters im Wesentlichen in Abhängigkeit der Brennraumtemperatur und nimmt mit zunehmender Brennraumtemperatur ab. Die Kaltstartphase ist somit maßgeblich für die Einhaltung der gesetzlich vorgeschriebenen Partikelgrenzwerte sowohl bezüglich der Partikelmasse als auch bezüglich der Partikelanzahl. Bei kalten Außentemperaturen, insbesondere bei Umgebungstemperaturen unterhalb von 0°C werden bei einem Ottomotor aufgrund der geringen Gemischhomogenisierung und Verdampfung des Kraftstoffs sowie der Startanreicherung besonders hohe Partikelemissionen emittiert. Zudem führt ein Kaltstart mit einem unterstöchiometrischen, fetten Verbrennungsluftverhältnis zu höheren Emissionen an Kohlenmonoxid (CO) und unverbrannten Kohlenwasserstoffen (HC), da eine Konvertierung in Kohlenstoffdioxid und Wasserdampf aufgrund des kalten Katalysators noch nicht möglich ist. Im Fahrbetrieb wird bei Kraftfahrzeugen mit einem Ottopartikelfilter dieser Ottopartikelfilter dann weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Bei sich weiter verschärfenden Abgasgesetzgebungen besteht ein technischer Lösungsansatz darin, die Kaltstartemissionen von Ottomotoren zu senken, da diese einen signifikanten Anteil der Emissionen im gesamten Fahrzyklus ausmachen. Diese Anforderung gewinnt an Bedeutung, wenn die Gültigkeitsstrecke einer innerstädtischen Real-Driving-Emissions-Fahrt weiter abgesenkt wird, da hierdurch der Anteil des Kaltstarts an Gewicht gewinnt. Als Lösung können entweder die Rohemissionen des Verbrennungsmotors gesenkt und/oder die Konvertierungsleistung der Abgasnachbehandlung verbessert werden. Eine Möglichkeit, die Effizienz der Abgasnachbehandlung in der Kaltstartphase zu erhöhen liegt darin, einen Drei-Wege-Katalysator schneller auf seine Betriebstemperatur aufzuheizen. Hierzu können innermotorisch, wie eine Verstellung des Zündwinkels, sowie außermotorische Maßnahmen, wie beispielsweise externe Heizelemente oder Abgasbrenner eingesetzt werden. Die außermotorischen Maßnahmen müssen dabei zielführend in das Abgasanlagenkonzept integriert werden, um eine möglichst schnelle und effiziente Aufheizung der Abgasnachbehandlungskomponenten zu erreichen.

Aus der DE 10 2019 209 298 A1 ist ein Ringkatalysator mit einer ersten rohrförmigen Strömungsstrecke, mit einem Umlenkbereich und mit einer zweiten ringförmigen Strömungsstrecke bekannt. Dabei ist die rohrförmige Strömungsstrecke durch ein Innenrohr gebildet, wobei die ringförmige Strömungsstrecke zwischen einem im Wesentlichen parallel zum Innenrohr verlaufenden Außenrohr und dem Innenrohr gebildet ist und der Umlenkbereich zur Umlenkung der Abgasströmung aus der rohrförmigen Strömungsstrecke in die ringförmige Strömungsstrecke ausgebildet ist.

Die DE 10 2019 209 301 A1 offenbart eine Vorrichtung zur Abgasnachbehandlung, insbesondere einen Ringkatalysator, mit einer ersten rohrförmigen Strömungsstrecke, mit einer Umlenkkammer und mit einer zweiten ringförmigen Strömungsstrecke, wobei die rohrförmige Strömungsstrecke in radialer Richtung nach außen durch ein Innenrohr begrenzt ist und die zweite ringförmige Strömungsstrecke in radialer Richtung nach innen durch das Innenrohr und nach außen durch ein Außenrohr begrenzt ist und die Umlenkkammer zur Umlenkung des Abgasstroms aus der rohrförmigen Strömungsstrecke in die ringförmige Strömungsstrecke ausgebildet ist. Dabei ist der Ringkatalysator mittels eines elektrischen Heizelements beheizbar.

Die JP 59039916 A offenbart ein Abgasnachbehandlungssystem für einen Verbrennungsmotor. Dabei wird ein Abgasstrom stromabwärts einer Turbine eines Abgasturboladers in einer Umlenkkammer abgelenkt. Dabei werden die Rußpartikel nach Art eines Zyklons in den äußeren Bereich des Abgaskanals gefördert und dort durch in einem ringförmigen und elektrisch beheizbaren Partikelfilter gesammelt.

Der Erfindung liegt nun die Aufgabe zugrunde, ein möglichst effizientes Aufheizen der Abgasnachbehandlungskomponenten in einer Kaltstartphase des Verbrennungsmotors zu erreichen und die Regeneration des Partikelfilters zu erleichtern.

Die Aufgabe wird durch ein Abgasnachbehandlungssystem mit den Merkmalen des unabhängigen Patentanspruchs gelöst.

Erfindungsgemäß ist vorgesehen, dass der motornahe erste Drei-Wege-Katalysator in einem ersten Gehäuse und der motornahe zweite Drei-Wege-Katalysator, vorzugsweise sowohl der motornahe zweite Drei-Wege-Katalysator als auch der Partikelfilter, in einem zweiten Gehäuse angeordnet sind, wobei die Mittelachse des ersten Gehäuses und die Mittelachse des zweiten Gehäuses in einem Winkel von -10° bis 70° zueinander angeordnet sind. Dabei wird ein Abgasstrom des Verbrennungsmotors durch ein Umlenkelement zwischen dem ersten Gehäuse und dem zweiten Gehäuse um mindestens 100° umgelenkt. Unter einem motornahem Drei-Wege-Katalysator ist in diesem Zusammenhang ein Katalysator zu verstehen, dessen Einlass eine Abgaslauflänge von weniger als 80cm, vorzugsweise von weniger als 60cm, besonders bevorzugt von weniger als 50cm ab einem Auslass des Verbrennungsmotors aufweist. Durch die Anordnung des elektrischen Heizelements und des ersten Drei-Wege-Katalysators in ein Gehäuse sowie des zweiten Drei-Wege-Katalysators und des Partikelfilters in einem weiteren gemeinsamen Gehäuse können sowohl die Drei-Wege-Katalysatoren als auch der Partikelfilter in einer motornahen Position angeordnet werden. Dies ermöglicht in Kombination mit dem elektrischen Heizelement sowie dem Umlenkelement ein besonders schnelles und effizientes Aufheizen des Abgasnachbehandlungssystems nach einem Kaltstart des Verbrennungsmotors und ermöglicht somit eine besonders effektive und effiziente Konvertierung der Schadstoffe im Abgasstrom des Verbrennungsmotors. Zudem wird eine Regeneration des Partikelfilters auch bei einem Schwachlastbetrieb des Verbrennungsmotors durch die motornahe Position sowie die optionale Aufheizung des Abgasstroms durch das elektrische Heizelement begünstigt.

Durch die in den abhängigen Ansprüchen genannten Merkmale sind vorteilhafte Verbesserungen und Weiterentwicklungen des im unabhängigen Anspruch genannten Abgasnachbehandlungssystems möglich.

In bevorzugter Ausgestaltung der Erfindung ist vorgesehen, dass das Umlenkelement in Strömungsrichtung eines Abgasstroms durch das Umlenkelement einen Trichter, stromabwärts des Trichters einen Bereich einer Einschnürung und stromabwärts des Bereichs der Einschnürung eine Aufweitung aufweist. Auf diese Art und Weise kann das Umlenkelement in der Form eines Telefonhörers ausgeführt werden. Diese Ausführungsform ermöglicht eine besonders kompakte Bauweise und somit die Anordnung sämtlicher vorstehend genannter Abgasnachbehandlungskomponenten in einer motornahen Position.

Besonders bevorzugt ist dabei, wenn sich ein Querschnitt des Umlenkelements ausgehend von der Einschnürung kontinuierlich erweitert. Durch eine kontinuierliche Aufweitung des Strömungsquerschnitts können die Strömungsverluste in der Abgasanlage verringert werden. Dadurch kann der Abgasgegendruck abgesenkt und die Kraftstoffeffizienz des Verbrennungsmotors erhöht werden.

In einer vorteilhaften Ausgestaltung des Abgasnachbehandlungssystems ist vorgesehen, dass das elektrische Heizelement als eine elektrische Heizscheibe ausgebildet ist. Eine elektrische Heizscheibe bietet eine besonders kompakte Möglichkeit, den Abgasstrom des Verbrennungsmotors effektiv zu beheizen. Dabei wird in Strömungsrichtung nur wenig Bauraum benötigt, sodass das Abgasnachbehandlungssystem auch in engen Motorräumen verbaut werden kann.

In einer bevorzugten Ausgestaltung der Erfindung ist vorgesehen, dass das elektrische Heizelement stromaufwärts des motornahen ersten Drei-Wege-Katalysators angeordnet ist. Durch eine Anordnung des elektrischen Heizelements stromaufwärts des motornahen ersten Drei-Wege-Katalysators wird dieser besonders schnell nach einem Kaltstart auf seine Light-Off-Temperatur aufgeheizt, sodass die Kaltstartemissionen signifikant verringert werden können.

In einer alternativen Ausgestaltung der Erfindung ist vorgesehen, dass das elektrische Heizelement stromabwärts des motornahen ersten Drei-Wege-Katalysators angeordnet ist. Dabei ist das elektrische Heizelement vorzugsweise stromaufwärts des Umlenkelements im Gehäuse des motornahen ersten Drei-Wege-Katalysators angeordnet. Dadurch wird der motornahe zweite Drei-Wege-Katalysator besonders schnell auf seine Light-Off-Temperatur aufgeheizt. Dies kann von Vorteil sein, wenn das Katalysatorvolumen des zweiten Drei-Wege-Katalysators gering ist und dieser somit wenig thermische Masse aufweist und sich somit besonders schnell aufheizen lässt. Zudem kann in dieser Position der Partikelfilter schneller auf seine Regenerationstemperatur aufgeheizt werden, da bei einer Positionierung des elektrischen Heizelements stromabwärts des motornahen ersten Drei-Wege-Katalysators eine Durchwärmung dieses Katalysators entfällt.

In einer weiteren vorteilhaften Ausgestaltung des Abgasnachbehandlungssystem ist vorgesehen, dass der motornahe erste Drei-Wege-Katalysator ein erstes Teilsegment und ein stromabwärts des ersten Teilsegments ausgebildetes zweites Teilsegment umfasst, wobei das elektrische Heizelement stromabwärts des ersten Teilsegments und stromaufwärts des zweiten Teilsegments angeordnet ist. Diese Position bietet einen vorteilhaften Kompromiss zwischen den beiden vorhergehend erwähnten Positionen des elektrischen Heizelements. Zudem kann das zweite Teilsegment des motornahen ersten Drei-Wege-Katalysators entsprechend kleinvolumig ausgeführt werden, sodass dieses Teilsegment besonders schnell seine Light-Off-Temperatur erreicht. Darüber hinaus werden in dieser Position sowohl das erste Teilsegment als auch das zweite Teilsegment durch die Wärmestrahlung des elektrischen Heizelements aufgeheizt, wodurch ein besonders schnelles und effizientes Aufheizen des motornahen ersten Drei-Wege-Katalysators möglich ist.

In einer bevorzugten Ausgestaltung des Abgasnachbehandlungssystems ist vorgesehen, dass ein Durchmesser des motornahen ersten Drei-Wege-Katalysators größer als eine Länge des motornahen ersten Drei-Wege-Katalysators ist. Dadurch ist eine besonders kompakte Ausführung des motornahen ersten Drei-Wege-Katalysators möglich.

In einer bevorzugten Ausgestaltung des Abgasnachbehandlungssystem ist vorgesehen, dass ein Durchmesser des motornahen zweiten Drei-Wege-Katalysators größer als eine Länge des zweiten Drei-Wege-Katalysators ist. Dadurch ist eine besonders kompakte Ausführung der Baueinheit mit dem zweiten Drei-Wege-Katalysator und dem Partikelfilter möglich.

Besonders bevorzugt ist dabei, wenn der Durchmesser des motornahen zweiten Drei-Wege-Katalysators größer als der Durchmesser des motornahen ersten Drei-Wege-Katalysators und/oder die Länge des motornahen ersten Drei-Wege-Katalysators größer als die Länge des motornahen zweiten Drei-Wege-Katalysators ist. Dadurch ergibt sich im Zusammenspiel mit dem Umlenkelement eine besonders kompakte und Bauraum-optimierte Ausführung des Abgasnachbehandlungssystems.

Ein weiterer Teilaspekt der Erfindung betrifft zudem ein Verfahren zur Abgasnachbehandlung eines Verbrennungsmotors mit einem solchen Abgasnachbehandlungssystem, wobei ein Abgasstrom des Verbrennungsmotors vor Eintritt in den zweiten Drei-Wege-Katalysator, vorzugsweise vor Eintritt in den ersten Drei-Wege-Katalysator erhitzt und vor Eintritt in den zweiten Drei-Wege-Katalysator durch das Umlenkelement umgelenkt wird. Durch ein solches Verfahren, bei dem der Abgasstrom des Verbrennungsmotors ab dem Kaltstart des Verbrennungsmotors durch das elektrische Heizelement aufgeheizt wird, erreichen die Abgasnachbehandlungskomponenten besonders schnell ihre Light-Off-Temperaturen und können somit entsprechend schnell und effektiv zu einer Minderung der Real-Driving-Emission beitragen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit denselben Bezugsziffern gekennzeichnet. Es zeigen:
- Figur 1: einen Verbrennungsmotor mit einem erfindungsgemäßen Abgasnachbehandlungssystem in einer schematischen Darstellung;
- Figur 2: ein bevorzugtes Ausführungsbeispiel eines erfindungsgemäßen Abgasnachbehandlungssystems für einen Verbrennungsmotor;
- Figur 3: ein weiteres bevorzugtes Ausführungsbeispiel eines erfindungsgemäßen Abgasnachbehandlungssystems für einen Verbrennungsmotor; und
- Figur 4: ein bevorzugtes Ausführungsbeispiel eines erfindungsgemäßen Abgasnachbehandlungssystems für einen Verbrennungsmotor.

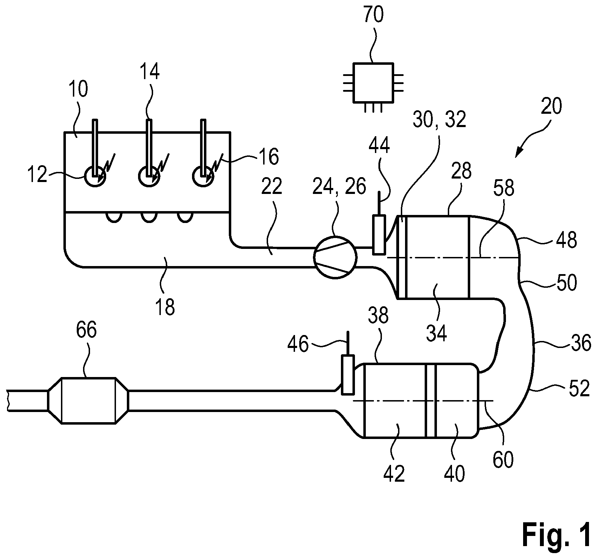

Figur 1 zeigt die schematische Darstellung eines Verbrennungsmotors 10. Der Verbrennungsmotor 10 ist als direkteinspritzender Ottomotor ausgeführt. Der Verbrennungsmotor 10 weist mehrere Brennräume 12 auf. An den Brennräumen 12 sind jeweils ein Kraftstoffinjektor 14 zur Einspritzung eines Kraftstoffes in den jeweiligen Brennraum 12 sowie eine Zündkerze 16 zur Zündung eines Kraftstoff-Luft-Gemischs in dem jeweiligen Brennraum 12 angeordnet. Der Verbrennungsmotor 10 ist mit seinem Einlass mit einem Luftversorgungssystem und mit seinem Auslass 18 mit einer Abgasanlage 20 verbunden. An den Brennräumen 12 sind Einlassventile und Auslassventile angeordnet, mit welchen eine fluidische Verbindung vom Luftversorgungssystem zu den Brennräumen 12 oder von den Brennräumen 12 zur Abgasanlage 20 geöffnet oder verschlossen werden kann.

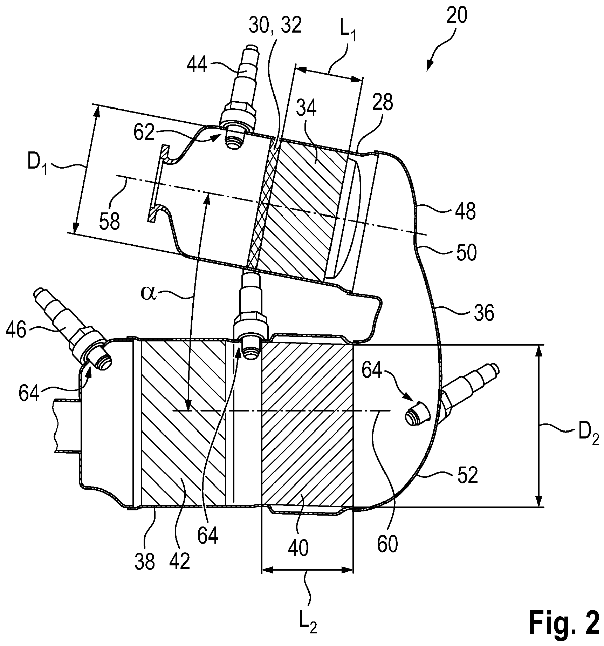

Figur 2 zeigt ein bevorzugtes Ausführungsbeispiel eines Abgasnachbehandlungssystems für einen solchen Verbrennungsmotor 10. Die Abgasanlage 20 umfasst einen Abgaskanal 22, in welchem in Strömungsrichtung eines Abgases des Verbrennungsmotors 10 durch den Abgaskanal 22 eine Turbine 26 eines Abgasturboladers 24 angeordnet ist, welche einen Verdichter im Luftversorgungssystem des Verbrennungsmotors 10 über eine Welle antreibt. Stromabwärts der Turbine 26 ist als motornahe erste Abgasnachbehandlungskomponente ein erster Drei-Wege-Katalysator 34 angeordnet. Der erste Drei-Wege-Katalysator ist über ein dem ersten Drei-Wege-Katalysator 34 vorgeschaltetes elektrisches Heizelement 30, insbesondere über eine elektrische Heizscheibe 32, unabhängig vom Abgasstrom des Verbrennungsmotors 10 beheizbar. Der erste Drei-Wege-Katalysator 34 und das elektrische Heizelement 30 sind vorzugsweise in einem gemeinsamen Gehäuse 28 angeordnet und können somit als Abgasnachbehandlungseinheit vormontiert werden. Ferner ist an dem ersten Gehäuse 28, vorzugsweise stromaufwärts des elektrischen Heizelements 30, eine erste Aufnahmeöffnung 62 ausgebildet, an welcher eine erste Lambdasonde 44, insbesondere eine Breitbandsonde, in dem Gehäuse 28 befestigt werden kann.

Stromabwärts des ersten Drei-Wege-Katalysators 34 ist ein Umlenkelement 36 vorgesehen, mit welchem der Abgasstrom des Verbrennungsmotors 10 umgelenkt wird. Das Umlenkelement 36 ist vorzugsweise in der Form eines Telefonhörers ausgebildet und weist in Strömungsrichtung einen Trichter 48, einen Bereich einer Einschnürung 50 und nachfolgend einen Bereich einer Aufweitung 52 auf. An dem Umlenkelement 36 kann eine weitere Aufnahmeöffnung 64 zur Aufnahme einer zweiten Lambdasonde 46, insbesondere einer Sprungsonde, ausgebildet sein.

Stromabwärts des Umlenkelements 36 ist ein motornaher zweiter Drei-Wege-Katalysator 40 angeordnet, welchem in Strömungsrichtung ein motornaher Partikelfilter 42 nachgeschaltet ist. Der zweite Drei-Wege-Katalysator 40 und der Partikelfilter 42 sind dabei vorzugsweise in einem gemeinsamen Gehäuse 38 angeordnet und somit als Baugruppe vormontierbar. An dem Gehäuse 38 kann eine weitere Aufnahmeöffnung 64 zur Aufnahme einer Lambdasonde 46, insbesondere einer Sprungsonde, ausgebildet sein. Der motornahe erste Drei-Wege-Katalysator 34 weist einen Durchmesser D₁ und eine Länge L₁ auf, wobei der Durchmesser D₁ vorzugsweise größer als die Länge L₁ ist. Der zweite Drei-Wege-Katalysator 40 weist einen Durchmesser D₂ und eine Länge L₂ auf, wobei der Durchmesser D₂ vorzugsweise größer als die Länge L₂ ist. Bevorzugt ist der Durchmesser D₂ des zweiten Drei-Wege-Katalysators 40 größer als der Durchmesser D₁ des motornahen ersten Drei-Wege-Katalysators 34.

Durch das Gehäuse des motornahen ersten Drei-Wege-Katalysators 34 verläuft eine erste Mittelachse M₁. Durch das Gehäuse des motornahen zweiten Drei-Wege-Katalysators 40 und des Partikelfilters 42 verläuft eine zweite Mittelachse M₂. Dabei sind die beiden Mittelachsen M₁ und M₂ in einem Winkel von 10° bis 70° zueinander geneigt.

Ferner ist es möglich, dass in der Abgasanlage 20 stromabwärts des motornahen Partikelfilters 42 eine oder mehrere weitere Abgasnachbehandlungskomponente(n), insbesondere ein weiterer Drei-Wege-Katalysator 66, angeordnet sind. Die weiteren Abgasnachbehandlungskomponenten sind vorzugsweise in einer motorfernen Position, insbesondere in einer Unterbodenposition eines Kraftfahrzeuges angeordnet.

Stromabwärts der Turbine 26 des Abgasturboladers 24 und stromaufwärts des elektrischen Heizelements 30 ist eine erste Lambdasonde 44, vorzugsweise eine Breitbandsonde, angeordnet. Stromabwärts des Partikelfilters 42 ist eine zweite Lambdasonde 46 angeordnet, welche vorzugsweise als Sprungsonde ausgeführt ist. Alternativ kann die zweite Lambdasonde 46 auch stromaufwärts des zweiten Drei-Wege-Katalysators 40 oder stromabwärts des zweiten Drei-Wege-Katalysators 40 und stromaufwärts des Partikelfilters 42 angeordnet sein.

Der erste Drei-Wege-Katalysator 34 und der zweite Drei-Wege-Katalysator 40 können wahlweise als Keramik- oder Metallträgersubstrat ausgeführt sein.

Die Kraftstoffinjektoren 14, die Zündkerzen 16 sowie die Lambdasonden 44, 46 sind über Signalleitungen mit einem Steuergerät 70 des Verbrennungsmotors 10 verbunden, über welches die Einspritzmenge sowie der Einspritzzeitpunkt des Kraftstoffs in die Brennräume 12 gesteuert wird.

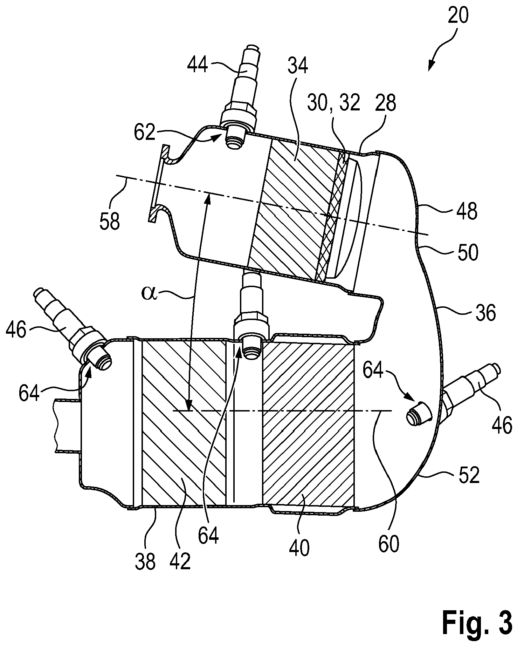

In Figur 3 ist ein weiteres bevorzugtes Ausführungsbeispiel für ein erfindungsgemäßes Abgasnachbehandlungssystem dargestellt. Das Abgasnachbehandlungssystem weist eine Abgasanlage 20 mit einem Abgaskanal 22 auf, in welchem in Strömungsrichtung eines Abgases des Verbrennungsmotors 10 durch den Abgaskanal 22 eine Turbine 26 eines Abgasturboladers 24 angeordnet ist, welche einen Verdichter im Luftversorgungssystem des Verbrennungsmotors 10 über eine Welle antreibt. Stromabwärts der Turbine 26 ist als motornahe erste Abgasnachbehandlungskomponente ein erster Drei-Wege-Katalysator 34 angeordnet. Der erste Drei-Wege-Katalysator 34 ist über ein dem ersten Drei-Wege-Katalysator 34 nachgeschaltetes elektrisches Heizelement 30, insbesondere über eine elektrische Heizscheibe 32 unabhängig vom Abgasstrom des Verbrennungsmotors 10 beheizbar. Der erste Drei-Wege-Katalysator 34 und das elektrische Heizelement 30 sind vorzugsweise in einem gemeinsamen Gehäuse 28 angeordnet und können somit als Abgasnachbehandlungseinheit vormontiert werden. Ferner ist an dem ersten Gehäuse 28 stromaufwärts des ersten Drei-Wege-Katalysators 34 eine erste Aufnahmeöffnung 62 ausgebildet, an welcher eine erste Lambdasonde 44, insbesondere eine Breitbandsonde, in dem Gehäuse 28 befestigt werden kann.

Stromabwärts des ersten Drei-Wege-Katalysators 34 ist ein Umlenkelement 36 vorgesehen, mit welchem der Abgasstrom des Verbrennungsmotors 10 umgelenkt wird. Das Umlenkelement 36 ist vorzugsweise in der Form eines Telefonhörers ausgebildet und weist in Strömungsrichtung einen Trichter 48, einen Bereich einer Einschnürung 50 und nachfolgend einen Bereich einer Aufweitung 52 auf. An dem Umlenkelement 36 kann eine weitere Aufnahmeöffnung 64 zur Aufnahme einer zweiten Lambdasonde 46, insbesondere einer Sprungsonde, ausgebildet sein.

Stromabwärts des Umlenkelements 36 ist ein motornaher zweiter Drei-Wege-Katalysator 40 angeordnet, welchem in Strömungsrichtung ein motornaher Partikelfilter 42 nachgeschaltet ist. Der zweite Drei-Wege-Katalysator 40 und der Partikelfilter 42 sind dabei vorzugsweise in einem gemeinsamen Gehäuse 38 angeordnet und somit als Baugruppe vormontierbar. An dem Gehäuse 38 kann eine weitere Aufnahmeöffnung 64 zur Aufnahme einer Lambdasonde 46, insbesondere einer Sprungsonde, ausgebildet sein.

Durch das Gehäuse des motornahen ersten Drei-Wege-Katalysators 34 verläuft eine erste Mittelachse M₁. Durch das Gehäuse des motornahen zweiten Drei-Wege-Katalysators 40 und des Partikelfilters 42 verläuft eine zweite Mittelachse M₂. Dabei sind die beiden Mittelachsen M₁ und M₂ in einem Winkel von 10° bis 70° zueinander geneigt.

Ferner ist es möglich, dass in der Abgasanlage 20 stromabwärts des motornahem Partikelfilters 42 eine oder mehrere weitere Abgasnachbehandlungskomponente(n), insbesondere ein weiterer Drei-Wege-Katalysator 66, angeordnet sind. Die weiteren Abgasnachbehandlungskomponenten sind vorzugsweise in einer motorfernen Position, insbesondere in einer Unterbodenposition eines Kraftfahrzeuges angeordnet.

Stromabwärts der Turbine 26 des Abgasturboladers 24 und stromaufwärts des elektrischen Heizelements 30 ist eine erste Lambdasonde 44, vorzugsweise eine Breitbandsonde, angeordnet. Stromabwärts des Partikelfilter 42 ist eine zweite Lambdasonde 46 angeordnet, welche vorzugsweise als Sprungsonde ausgeführt ist. Alternativ kann die zweite Lambdasonde 46 auch stromaufwärts des zweiten Drei-Wege-Katalysators 40 oder stromabwärts des zweiten Drei-Wege-Katalysators 40 und stromaufwärts des Partikelfilters 42 angeordnet sein.

Der erste Drei-Wege-Katalysator 34 und der zweite Drei-Wege-Katalysator 40 können wahlweise als Keramik- oder Metallträgersubstrat ausgeführt sein.

Die Kraftstoffinjektoren 14, die Zündkerzen 16 sowie die Lambdasonden 44, 46 sind über Signalleitungen mit einem Steuergerät 70 des Verbrennungsmotors 10 verbunden, über welches die Einspritzmenge sowie der Einspritzzeitpunkt des Kraftstoffs in die Brennräume 12 gesteuert wird.

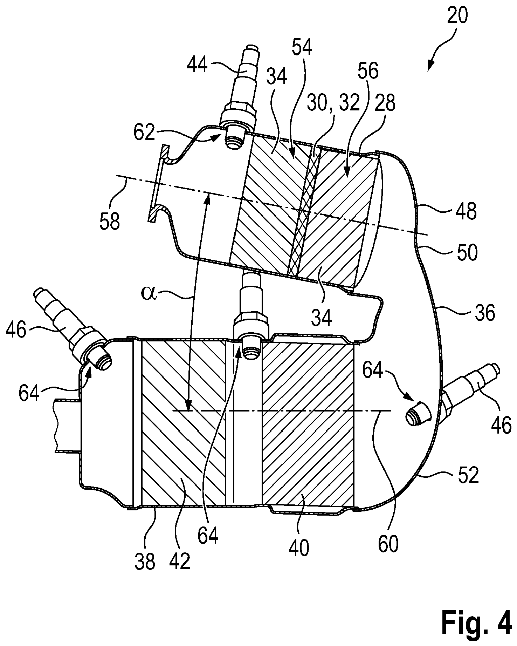

In Figur 4 ist ein weiteres bevorzugtes Ausführungsbeispiel eines erfindungsgemäßen Abgasnachbehandlungssystems dargestellt. Das Abgasnachbehandlungssystem weist eine Abgasanlage 20 mit einem Abgaskanal 22 auf, in welchem in Strömungsrichtung eines Abgases des Verbrennungsmotors 10 durch den Abgaskanal 22 eine Turbine 26 eines Abgasturboladers 24 angeordnet ist, welche einen Verdichter im Luftversorgungssystem des Verbrennungsmotors 10 über eine Welle antreibt. Stromabwärts der Turbine 26 ist als motornahe erste Abgasnachbehandlungskomponente ein erster Drei-Wege-Katalysator 34 angeordnet. Der erste Drei-Wege-Katalysator 34 umfasst ein erstes Teilsegment 54 und ein stromabwärts des ersten Teilsegments 54 angeordnetes zweites Teilsegment 56. Dabei ist stromabwärts des ersten Teilsegments 54 und stromaufwärts des zweiten Teilsegments 56 ein elektrisches Heizelement 30, insbesondere eine elektrische Heizscheibe 32, angeordnet, mit welchem der motornahe erste Drei-Wege-Katalysator 34 unabhängig vom Abgasstrom des Verbrennungsmotors 10 beheizbar ist. Die beiden Teilsegmente 54, 56 des ersten Drei-Wege-Katalysators 34 und das elektrische Heizelement 30 sind vorzugsweise in einem gemeinsamen Gehäuse 28 angeordnet und können somit als Abgasnachbehandlungseinheit vormontiert werden. Ferner ist an dem ersten Gehäuse 28 stromaufwärts des ersten Teilsegments 54 eine erste Aufnahmeöffnung 62 ausgebildet, an welcher eine erste Lambdasonde 44, insbesondere eine Breitbandsonde, in dem Gehäuse 28 befestigbar ist.

Stromabwärts des ersten Drei-Wege-Katalysators 34 ist ein Umlenkelement 36 vorgesehen, mit welchem der Abgasstrom des Verbrennungsmotors 10 umgelenkt wird. Das Umlenkelement 36 ist vorzugsweise in der Form eines Telefonhörers ausgebildet und weist in Strömungsrichtung einen Trichter 48, einen Bereich einer Einschnürung 50 und nachfolgend einen Bereich einer Aufweitung 52 auf. An dem Umlenkelement 36 kann eine weitere Aufnahmeöffnung 64 zur Aufnahme einer zweiten Lambdasonde 46, insbesondere einer Sprungsonde, ausgebildet sein.

Stromabwärts des Umlenkelements 36 ist ein motornaher zweiter Drei-Wege-Katalysator 40 angeordnet, welchem in Strömungsrichtung ein motornaher Partikelfilter 42 nachgeschaltet ist. Der zweite Drei-Wege-Katalysator 40 und der Partikelfilter 42 sind dabei vorzugsweise in einem gemeinsamen Gehäuse 38 angeordnet und somit als Baugruppe vormontierbar. An dem Gehäuse 38 kann eine weitere Aufnahmeöffnung 64 zur Aufnahme einer Lambdasonde 46, insbesondere einer Sprungsonde, ausgebildet sein.

Durch das Gehäuse des motornahen ersten Drei-Wege-Katalysators 34 verläuft eine erste Mittelachse M₁. Durch das Gehäuse des motornahen zweiten Drei-Wege-Katalysators 40 und des Partikelfilters 42 verläuft eine zweite Mittelachse M₂. Dabei sind die beiden Mittelachsen M₁ und M₂ in einem Winkel von 10° bis 70° zueinander geneigt.

Ferner ist es möglich, dass in der Abgasanlage 20 stromabwärts des motornahem Partikelfilters 42 eine oder mehrere weitere Abgasnachbehandlungskomponente(n), insbesondere ein weiterer Drei-Wege-Katalysator 66, angeordnet sind. Die weiteren Abgasnachbehandlungskomponenten sind vorzugsweise in einer motorfernen Position, insbesondere in einer Unterbodenposition eines Kraftfahrzeuges angeordnet.

Stromabwärts der Turbine 26 des Abgasturboladers 24 und stromaufwärts des elektrischen Heizelements 30 ist eine erste Lambdasonde 44, vorzugsweise eine Breitbandsonde, angeordnet. Stromabwärts des Partikelfilters 42 ist eine zweite Lambdasonde 46 angeordnet, welche vorzugsweise als Sprungsonde ausgeführt ist. Alternativ kann die zweite Lambdasonde 46 auch stromaufwärts des zweiten Drei-Wege-Katalysators 40 oder stromabwärts des zweiten Drei-Wege-Katalysators 40 und stromaufwärts des Partikelfilters 42 angeordnet sein.

Der erste Drei-Wege-Katalysator 34 und der zweite Drei-Wege-Katalysator 40 können wahlweise als Keramik- oder Metallträgersubstrat ausgeführt sein.

Die Kraftstoffinjektoren 14, die Zündkerzen 16 sowie die Lambdasonden 44, 46 sind über Signalleitungen mit einem Steuergerät 70 des Verbrennungsmotors 10 verbunden, über welches die Einspritzmenge sowie der Einspritzzeitpunkt des Kraftstoffs in die Brennräume 12 steuerbar ist.

### Bezugszeichenliste

- 10: Verbrennungsmotor
- 12: Brennraum
- 14: Kraftstoffinjektor
- 16: Zündkerze
- 18: Auslass

- 20: Abgasanlage
- 22: Abgaskanal
- 24: Abgasturbolader
- 26: Turbine
- 28: erstes Gehäuse

- 30: elektrisches Heizelement
- 32: Heizscheibe
- 34: erster Drei-Wege-Katalysator
- 36: Umlenkelement
- 38: zweites Gehäuse

- 40: zweiter Drei-Wege-Katalysator
- 42: Partikelfilter
- 44: erste Lambdasonde
- 46: zweite Lambdasonde
- 48: Trichter

- 50: Einschnürung
- 52: Aufweitung
- 54: erstes Teilsegment (des ersten Drei-Wege-Katalysators)
- 56: zweites Teilsegment (des ersten Drei-Wege-Katalysators)
- 58: erste Mittelachse
- 60: zweite Mittelachse
- 62: erste Aufnahmeöffnung
- 64: zweite Aufnahmeöffnung
- 66: weiterer Drei-Wege-Katalysator

- 70: Steuergerät

## Patentansprüche

1. Abgasnachbehandlungssystem für einen Verbrennungsmotor (10) mit einer Abgasanlage (20), in welcher in Strömungsrichtung eines Abgasstroms des Verbrennungsmotors (10) durch einen Abgaskanal (22) der Abgasanlage (20) ein motornaher erster Drei-Wege-Katalysator (34) und stromabwärts des motornahen ersten Drei-Wege-Katalysators (34) ein zweiter motornaher Drei-Wege-Katalysator (40) und ein Partikelfilter (42) angeordnet sind, wobei dem motornahen ersten Drei-Wege-Katalysator (34) ein elektrisches Heizelement (30) zugeordnet ist, **dadurch gekennzeichnet, dass** der erste motornahe Drei-Wege-Katalysator (34) in einem ersten Gehäuse (28) und der motornahe zweite Drei-Wege-Katalysator (40) in einem zweiten Gehäuse (38) angeordnet ist, wobei die Mittelachse (M₁) des ersten Gehäuses (28) und die Mittelachse (M₂) des zweiten Gehäuses in einem Winkel von -10° bis 70° zueinander angeordnet sind, und wobei ein Abgasstrom des Verbrennungsmotors (10) durch ein Umlenkelement (36) zwischen dem ersten Gehäuse (28) und dem zweiten Gehäuse (38) um mindestens 100° umgelenkt wird.

2. Abgasnachbehandlungssystem nach Anspruch 1, **dadurch gekennzeichnet, dass** das Umlenkelement (36) in Strömungsrichtung des Abgasstroms durch das Umlenkelement einen Trichter (48), stromabwärts des Trichters (48) einen Bereich einer Einschnürung (50) und stromabwärts des Bereichs der Einschnürung (50) eine Aufweitung (52) aufweist.

3. Abgasnachbehandlungssystem nach Anspruch 2, **dadurch gekennzeichnet, dass** sich ein Querschnitt des Umlenkelements (36) ausgehend von der Einschnürung (50) kontinuierlich erweitert.

4. Abgasnachbehandlungssystem nach einem der Ansprüche 1 bis 3, **dadurch gekennzeichnet, dass** das elektrische Heizelement (30) als eine elektrische Heizscheibe (32) ausgebildet ist.

5. Abgasnachbehandlungssystem nach einem der Ansprüche 1 bis 4, **dadurch gekennzeichnet, dass** das elektrische Heizelement (30) stromaufwärts des motornahen ersten Drei-Wege-Katalysators (34) angeordnet ist.

6. Abgasnachbehandlungssystem nach einem der Ansprüche 1 bis 4, **dadurch gekennzeichnet, dass** das elektrische Heizelement (30) stromabwärts des motornahen ersten Drei-Wege-Katalysators (34) angeordnet ist.

7. Abgasnachbehandlungssystem nach einem der Ansprüche 1 bis 4, **dadurch gekennzeichnet, dass** der motornahe erste Drei-Wege-Katalysator ein erstes Teilsegment (54) und ein stromabwärts des ersten Teilsegments (54) angeordnetes zweites Teilsegment (56) umfasst, wobei das elektrische Heizelement (30) stromabwärts des ersten Teilsegments (54) und stromaufwärts des zweiten Teilsegments (56) angeordnet ist.

8. Abgasnachbehandlungssystem nach einem der Ansprüche 1 bis 7, **dadurch gekennzeichnet, dass** ein Durchmesser (D₁) des motornahen ersten Drei-Wege-Katalysators (34) größer als eine Länge (L₁) des motornahen ersten Drei-Wege-Katalysators (34) ist.

9. Abgasnachbehandlungssystem nach einem der Ansprüche 1 bis 8, **dadurch gekennzeichnet, dass** ein Durchmesser (D₂) des zweiten Drei-Wege-Katalysators (40) größer als eine Länge (L₂) des zweiten Drei-Wege-Katalysators (40) ist.

10. Verfahren zur Abgasnachbehandlung eines Verbrennungsmotors (10) mit einem Abgasnachbehandlungssystem nach einem der Ansprüche 1 bis 9, wobei ein Abgasstrom des Verbrennungsmotors vor Eintritt in den zweiten Drei-Wege-Katalysator (40) erhitzt und durch das Umlenkelement (36) umgelenkt wird.
